# EUROPEAN PATENT APPLICATION

(11) **EP 4 741 647 A1**
(43) Date of publication of application: **13.05.2026**
(21) Application number: 25214439.9
(22) Date of filing: 07.11.2025
(51) Int. Cl.: F02C 7/32, F16F 7/14

(54) **ENGINE ACCESSORY MOUNTING ASSEMBLY**

(30) Priority: 08.11.2024 US 202418941490
(71) Applicant: Pratt & Whitney Canada Corp., (01BE5) Longueuil, QC J4G 1A1 (CA)
(72) Inventor: DOWNARD, Sean, (01BE5) Longueuil, J4G 1A1 (CA); FAZARI, Edward, (01BE5) Longueuil, J4G 1A1 (CA); SWITZER, William, (01BE5) Longueuil, J4G 1A1 (CA)
(74) Representative: Dehns

(57) **Abstract**

A mounting arrangement includes a casing (17) of an aircraft engine (10) extending around an axis (11), an accessory (22), and a bracket (40) for mounting the accessory to the casing (17). The bracket (40) includes a first bracket segment (44') coupled to the casing (17) at a first mounting point, a second bracket segment (48') coupled to the accessory at a second mounting point, and a wire rope isolator (54') including a looped wire (56') coupling the first bracket segment (44') to the second bracket segment (48'). The first bracket segment (44') at the first mounting point and the second bracket segment (48') at the second mounting point extend in intersecting planes.

## Description

### TECHNICAL FIELD

The invention relates generally to aircraft engines, and, more particularly, to mounting arrangements in aircraft engines.

### BACKGROUND

Aircraft engines may include various accessories, such as accessory gearboxes, fluid tanks and cooling manifolds. These accessories are mounted to the engine casing, for instance, via mounting arrangements comprising one or more brackets. These brackets are subjected to various dynamic and thermal loads, which may cause premature wear. Improvements are desired.

### SUMMARY

In one aspect of the invention, there is provided a mounting arrangement, comprising: a casing of an aircraft engine extending around an axis; an accessory; a bracket for mounting the accessory to the casing, the bracket comprising a first bracket segment coupled to the casing at a first mounting point (e.g., defined by the casing); a second bracket segment coupled to the accessory at a second mounting point (e.g., defined by the accessory); and a wire rope isolator including a looped wire coupling the first bracket segment to the second bracket segment, the first bracket segment at the first mounting point and the second bracket segment at the second mounting point extending in intersecting planes (e.g., a portion of the first bracket segment at the first mounting point extends along a plane which intersects with a plane along which a portion of the second bracket segment at the second mounting point extends and/or a portion of the accessory at or defining the second mounting point extends along a plane which intersects with a plane along which a portion of the casing at or defining the first mounting point extends).

The mounting arrangement described above may include any of the following features, in any combinations.

In any of the aspects or embodiments described above or herein, the first bracket segment may include a planar section coupled (e.g., attached, bonded or connected) to a flange of the casing at the first mounting point, and an angled section (e.g., at an angle to a plane of the planar section) extending from the planar section and coupled to (e.g., attached, bonded, connected, in contact with or captured by) the looped wire. The second bracket segment may include a planar section coupled (e.g., attached, bonded or connected) to a flange of the accessory at the second mounting point, and an angled section (e.g., at an angle to a plane of the planar section) extending from the planar section and coupled to (e.g., attached, bonded, connected, in contact with or captured by) the looped wire. The first and second mounting points may be axially and radially spaced-part from one another relative to the axis.

In any of the aspects or embodiments described above or herein, the planar section of the first bracket segment and the planar section of the second bracket segment may extend in directions normal to one another. For example, a plane of the planar section of the first bracket segment and a plane of the planar section of the second bracket segment may be perpendicular to one another.

In any of the aspects or embodiments described above or herein, the angled section of the first bracket and the angled section of the second bracket may each include a plurality of apertures through which the looped wire extends.

In any of the aspects or embodiments described above or herein, the apertures may be distributed substantially across a (respective) entire width of each of the first bracket segment and the second bracket segment.

In any of the aspects or embodiments described above or herein, the accessory may be a cooling manifold.

In any of the aspects or embodiments described above or herein, the wire rope isolator may have characteristics including: a wire diameter, a wire length, a degree of wire twist, and a number of individual wires braided together. The characteristics of the wire rope isolator may be selected to dampen vibrations from the casing of the aircraft engine to the accessory (e.g., the cooling manifold).

In any of the aspects or embodiments described above or herein, the angled section of the first bracket and the angled section of the second bracket are coupled to (e.g., attached, bonded, connected, in contact with or captured by) the looped wire at diametrically opposed locations along the looped wire. For example, the looped wire may comprise a plurality of loops, rings or turns which may each be coupled to the angled section of the first bracket and the angled section of the second bracket at diametrically opposed locations of each loop, ring or turn.

In any of the aspects or embodiments described above or herein, the looped wire may comprise a plurality of loops, rings or turns.

In any of the aspects or embodiments described above or herein, the looped wire may comprise or otherwise be formed into a helical shape.

In any of the aspects or embodiments described above or herein, the accessory may comprise a cooling manifold.

In any of the aspects or embodiments described above or herein, the casing may comprise a turbine casing.

In another aspect of the invention, there is provided an aircraft engine, comprising: a turbine section having a turbine core housed within a turbine casing; a cooling system for the turbine section, the cooling system including a cooling manifold disposed around the turbine casing and a cooling conduit adapted to provide a cooling flow to the cooling manifold; and brackets disposed about a circumference of the cooling manifold and coupling the cooling manifold to the turbine casing, at least one of the brackets having a wire rope isolator including a looped wire coupling the cooling manifold to the casing (e.g., in accordance with any of the mounting arrangement aspects or embodiments described above or herein).

In another aspect of the invention, there is provided an aircraft engine, comprising: a turbine section having a turbine core housed within a turbine casing; an accessory for the turbine section (e.g., a cooling system for the turbine section, the cooling system including a cooling manifold disposed around the turbine casing and a cooling conduit adapted to provide a cooling flow to the cooling manifold); and brackets disposed about a circumference of the accessory (e.g., brackets disposed about a circumference of the cooling manifold) and coupling the accessory (e.g., the cooling manifold) to the turbine casing, at least one of the brackets having a wire rope isolator including a looped wire coupling the cooling manifold to the casing (e.g., in accordance with any of the mounting arrangement aspects or embodiments described above or herein).

The aircraft engine(s) described above may include any of the following features, in any combinations.

In any of the aspects or embodiments described above or herein, the at least one of the brackets may have a first bracket segment coupled (e.g., attached, bonded or connected) to the turbine casing at a first mounting point, and a second bracket segment coupled (e.g., attached, bonded or connected) to the cooling manifold at a second mounting point. The looped wire may couple (e.g., attach, bond, connect, contact or capture) the first bracket segment to the second bracket segment.

In any of the aspects or embodiments described above or herein, the first bracket segment may include a planar section coupled (e.g., attached, bonded or connected) to a flange of the casing and an angled section (e.g., at an angle to a plane of the planar section) extending from the planar section and coupled to (e.g., attached, bonded, connected, in contact with or captured by) the looped wire. The second bracket segment may include a planar section coupled (e.g., attached, bonded or connected) to a flange of the cooling manifold and an angled section (e.g., at an angle to a plane of the planar section) extending from the planar section and coupled to (e.g., attached, bonded, connected, in contact with or captured by) the looped wire.

In any of the aspects or embodiments described above or herein, the planar section of the first bracket segment and the planar section of the second bracket segment may extend in directions normal to one another.

In any of the aspects or embodiments described above or herein, the angled section of the first bracket and the angled section of the second bracket may each include a plurality of apertures through which the looped wire extends.

In any of the aspects or embodiments described above or herein, the wire rope isolator may have characteristics including: a wire diameter, a wire length, a degree of wire twist, and a number of individual wires braided together. The characteristics of the wire rope isolator may be selected to dampen vibrations from the turbine casing to the accessory (e.g., the cooling manifold).

In any of the aspects or embodiments described above or herein, the looped wire may extend substantially across a (respective) entire width of each of the first bracket segment and the second bracket segment.

In any of the aspects or embodiments described above or herein, the angled section of the first bracket and the angled section of the second bracket may be coupled to the looped wire at diametrically opposed locations along the looped wire.

In any of the aspects or embodiments described above or herein, the at least one of the brackets may have a bracket segment coupled to one of the turbine casing and the accessory

(e.g., the cooling manifold), the looped wire coupling the bracket segment to the other one of the turbine casing and the accessory (e.g., the cooling manifold).

In a further aspect of the invention, there is provided a method for absorbing vibrations between an accessory and a casing of an aircraft engine, comprising: coupling the accessory to the casing via brackets (e.g., one or more brackets according to any of the aspects or embodiments described above or herein), at least one of the brackets having a first bracket segment coupled to the casing, a second bracket segment coupled to the accessory, and a wire rope isolator including a looped wire coupling the first bracket segment to the second bracket segment, the looped wire dampening vibrations between the accessory and the casing.

The method described above may include any of the following features, in any combinations.

In any of the aspects or embodiments described above or herein, coupling the accessory to the casing via brackets may include coupling the looped wire to the first bracket segment and to the second bracket segment via apertures distributed substantially across the first bracket segment and the second bracket segment.

In any of the aspects or embodiments described above or herein, coupling the looped wire to the first bracket segment and to the second bracket segment may include coupling the looped wire to the first bracket segment and to the second bracket segment across a (respective) entire width of each of the first bracket segment and the second bracket segment.

In any of the aspects or embodiments described above or herein, coupling the accessory to the casing via brackets may include securing (e.g., attaching or bonding) the first bracket segment to the casing in a planar direction normal to a planar direction of the second bracket segment secured (e.g., attached or bonded) to the accessory.

### BRIEF DESCRIPTION OF THE DRAWINGS

Reference is now made to the accompanying figures in which:
FIG. 1 is a schematic cross sectional view of a gas turbine engine suitable for use as an aircraft engine;
FIG. 2 is a perspective view of an accessory mount for the engine of FIG. 1;
FIG. 3 is an enhanced cross sectional view of the accessory mount of FIG. 2, taken along line III-III, according to an embodiment;
FIG. 4 is a perspective view of a bracket for the accessory mount of FIG. 3; and
FIG. 5 is an enhanced cross sectional view of the accessory mount of FIG. 2, taken along line III-III, according to another embodiment.

### DETAILED DESCRIPTION

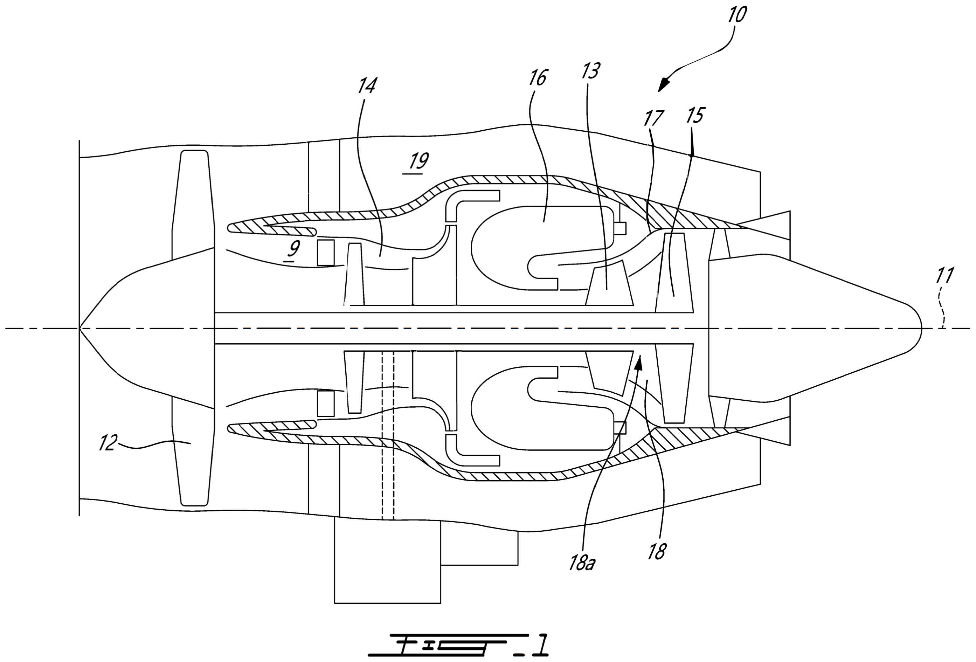

FIG. 1 illustrates a gas turbine engine 10 of a type preferably provided for use in subsonic flight, generally comprising in serial flow communication a fan 12 through which ambient air is propelled, a compressor section 14 for pressurizing the air, a combustor 16 in which the compressed air is mixed with fuel and ignited for generating an annular stream of hot combustion gases, and a turbine section 18 for extracting energy from the combustion gases. The fan 12 propels the ambient air through an inner core 9 of the engine 10, and an outer bypass duct 19. The turbine section 18 can have a turbine or turbine core 18a which can have a high pressure turbine (HPT) 13 and a low pressure turbine (LPT) 15, both of which are housed or enclosed by a turbine casing or case 17 extending around a longitudinal center axis 11 of the gas turbine engine 10. While engine 10 is shown to be a turbofan gas turbine engine, the present disclosure is also directed to other engine types, such as turboprop and turboshaft engines, as well as hybrid electric engines.

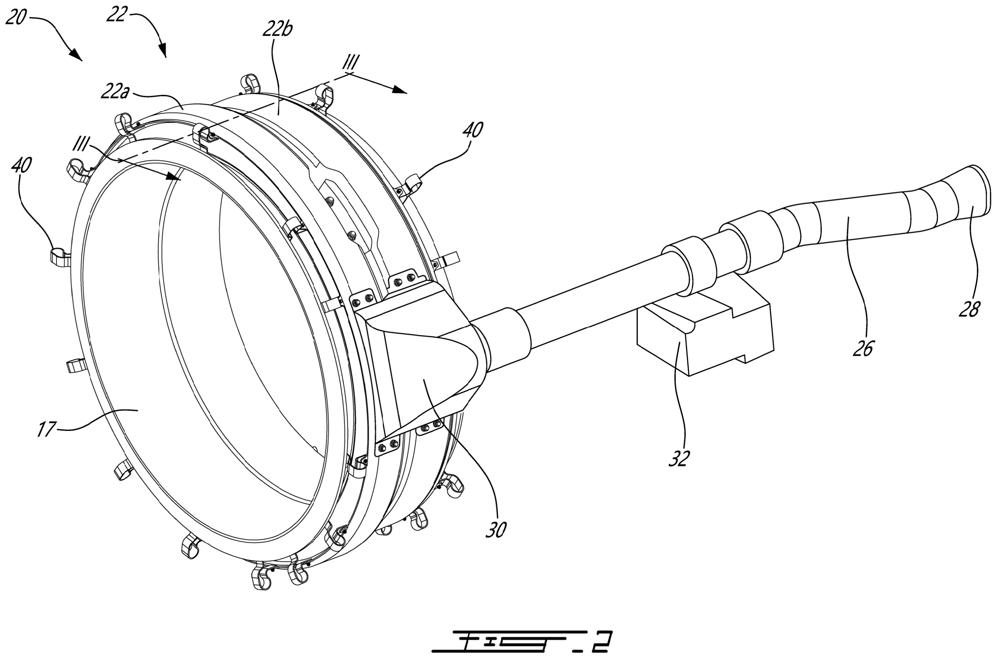

Referring to FIG. 2, an engine accessory adapted to be mounted to the engine case 17 is shown. According to the depicted example, the accessory is embodied as a cooling system 20 for cooling a part of the engine 10, such as the turbine casing or case 17. The proximity of the turbine case 17 to the working components of the turbine core 18a results in a significant heating of the turbine case 17. The cooling system 20 allows for the continuous regulation of the temperature of the turbine case 17, thus helping to maintain a control operational clearance between the turbine rotor blades of core 18a and the turbine case 17. In so doing, the cooling system 20 helps to maintain the optimum efficiency of the engine core 18a. According to some embodiments, the cooling system 20 may include the turbine case 17 and one or more cooling conduits 26, both of which will now be discussed in greater detail.

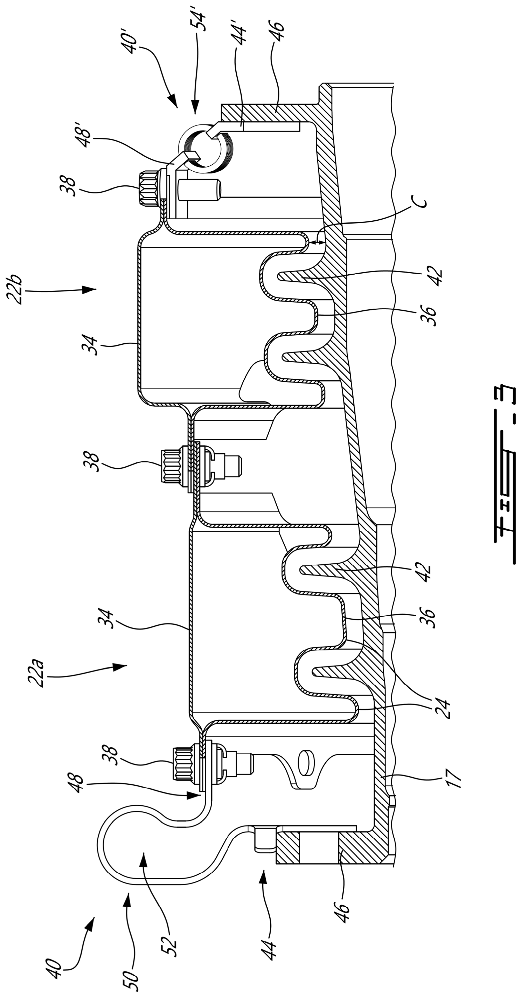

The turbine casing or case 17 extends circumferentially around the central axis 11 and encloses some (or all) of the turbine core 18a and separates it from the bypass duct 19. Referring to FIG. 3, the turbine case 17 can have, on a radially outwardly facing surface thereof, a turbine case cooling manifold assembly 22 (or simply "cooling manifold assembly 22"), which is located radially inward from the bypass duct 19. The cooling manifold assembly 22 surrounds or envelops the turbine case 17 and is adapted to distribute a cooling gas flow to the turbine case 17, thereby cooling the turbine case 17 and helping to maintain optimum clearance with the rotating components of the HPT 13 and LPT 15. One or more cooling manifold assemblies 22 can be used to cool the turbine case 17. For example, both the HPT 13 and the LPT 15 can each have their own cooling manifold assembly 22. In the shown example, the cooling manifold assembly 22 includes a first cooling manifold 22a and a second cooling manifold 22b, as will be described in further detail below.

In some embodiments, the cooling manifold assembly 22 has multiple apertures 24 (see FIG. 3) which are spaced apart through the cooling manifold assembly 22 about its circumference, thus surrounding the turbine case 17. The apertures 24 can distribute the cooling gas flow over the surface of the turbine case 17, thus providing a "showerhead" cooling flow to the turbine case 17. Other cooling flow distribution techniques are contemplated as well.

The cooling gas flow is supplied to the cooling manifold assembly 22 via the longitudinal cooling conduit 26. The cooling conduit 26 can be any pipe or duct which can convey the cooling gas flow from a cooling source, such as the bypass duct 19, to the cooling manifold assembly 22. The cooling conduit 26 can be a distinct component from the turbine case 17, or can extend through it. Indeed, in some embodiments, the cooling conduit 26 can be an elongated aperture extending through the turbine case 17. Although shown as substantially cylindrical, it will be appreciated that the cooling conduit 26 can take other shapes. The cooling conduit 26 has an inlet 28 which is in fluid flow communication with the bypass duct 19 such as to receive bypass air therefrom. Other sources of cooling flow may be contemplated. The cooling conduit 26 also has an outlet 30 which is in fluid flow communication with the cooling manifold assembly 22. In the shown embodiment, the flow of the cooling gas flow can be modulated by using suitable flow control devices, such as a valve 32.

Referring additionally to FIG. 3, a cross-sectional view of the cooling manifolds 22a, 22b mounted to the turbine case 17 is shown, according to an embodiment of the present disclosure. Each cooling manifold 22a, 22b includes an outer manifold body 34 and an inner manifold body 36 disposed radially inwardly of the outer manifold body 34. Each outer manifold body 34 is operatively connected to the inner manifold body 36 at various locations, illustratively via fasteners 38, as will be discussed below.

The cooling manifolds 22a, 22b are mounted to the turbine case 17 via brackets 40 with spring-like properties to allow the cooling manifolds 22a, 22b to expand under the high temperatures and to prevent high stresses from the turbine case 17 from reaching the manifold assembly 22. The brackets 40 are also adapted to govern the clearance C between the manifolds 22a, 22b and the turbine case 17. In the shown example, each cooling manifold 22a, 22b is connected to brackets 40 at a first axial end and to the other cooling manifold 22a, 22b at a second axial end, with circumferential arrays of brackets 40 extending about an outer circumference of each cooling manifold 22a, 22b (see FIG. 2). The brackets 40 are adapted to operatively couple the cooling manifolds 22a, 22b to the turbine case 17 and maintain the inner manifold bodies 36 at a radial distance (illustratively at a clearance C) from the turbine case 17 to allow the cooling flow to flow across the surface of the turbine case 17. **In** the shown case, the turbine case 17 includes circumferential ribs 42 extending radially outwardly therefrom, with the inner manifold bodies 36 maintaining the clearance C around the turbine case 17.

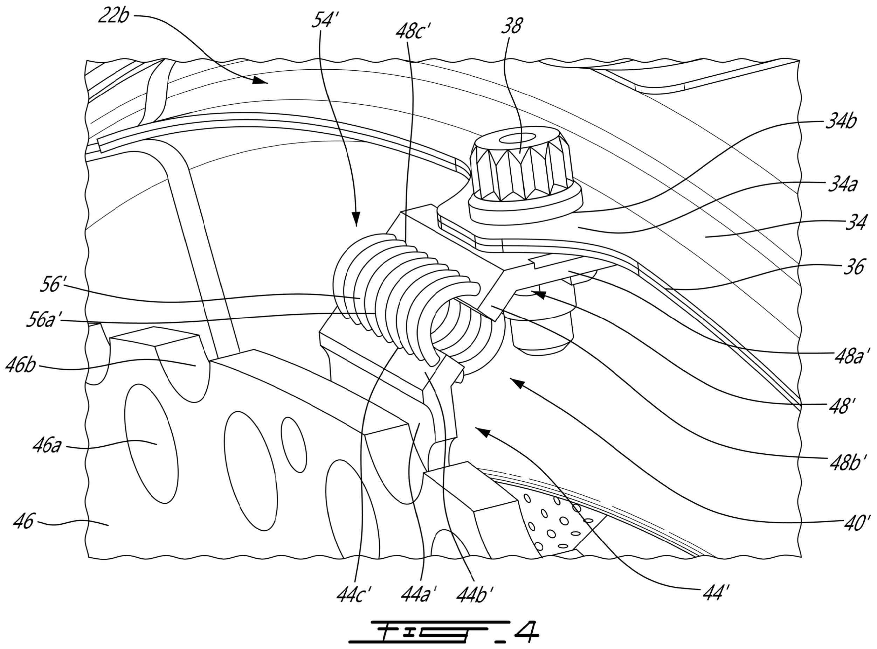

The shown bracket 40 has a first bracket segment 44 couplable to the turbine case 17, illustratively a flange or support 46 protruding radially outwardly from the turbine case 17. The bracket 40 has a second bracket segment 48 extending in a plane normal to that of the first bracket segment 44 and couplable to a respective one of the cooling manifold 22a, 22b, illustratively via fastener 38 at a junction between the outer manifold 34 and inner manifold 36. The bracket 40 further includes a curved portion 50 extending between the first bracket segment 44 and the second bracket segment 48, the curved portion 50 defining a partial loop at least partially enclosing an inner volume 52 of the bracket 40. In the shown embodiment, the first and second bracket segments 44, 48 include apertures 44a', 48a' disposed therethrough (see FIG. 4) for attachment to the turbine case 17 and the manifolds 22a, 22b, respectively.

The brackets 40 connecting the cooling manifold assembly 22 to the turbine case 17 are provided with a sufficient degree of flexibility to avoid over-stressing and preserve the structural integrity of the cooling manifolds 22a, 22b to avoid breaking. However, the brackets 40 are subjected to various stresses under typical engine 10 operation, which over time may lead to cracks or fractures, for instance due to high cycle fatigue. Due to the high temperatures adjacent the case of the engine 10 (e.g., up to 750° F), the brackets 40 are typically made from metal. While increasing the thickness of the brackets 40 would likely alleviate the vibration-related concerns, such an increase would decrease the flexibility of the brackets 40, potentially leading to damage to the manifolds 22a, 22b. In addition, due to the high temperatures adjacent the turbine case 17, the adjacent components are made of materials that can withstand these high temperatures, such as metal.

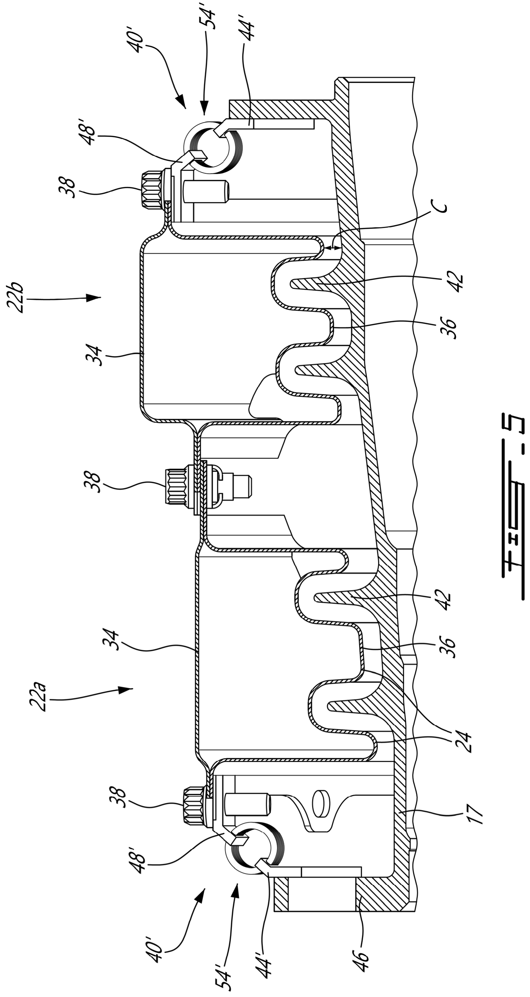

According to one aspect of the present disclosure, there is provided one or more damper brackets 40' connecting the turbine case 17 to the cooling manifold 22a, 22b. Damper brackets 40' include an integrated wire rope isolator 54' providing a dampening effect thereto, thereby tuning the arrangement to avoid undesirable vibration frequencies. Stated differently, each damper bracket 40' is adapted to dampen or absorb vibrations between the turbine case 17 and cooling manifolds 22a, 22b. The number of damper brackets 40' may vary. **In** some cases, each connection between the turbine case 17 and the manifolds 22a, 22b includes a damper bracket 40' (see FIG. 5). In other cases, the connections between the turbine case 17 and one of the manifolds 22a, 22b is provided with damper brackets 40' while the connections between the turbine case 17 and the other one of the manifolds 22a, 22b is provided with brackets 40 (i.e., without an integrated wire rope isolator 54'). Other configurations may be contemplated, for instance damper brackets 40' positioned at alternating sides of the manifold assembly 22.

Referring additionally to FIG. 4, in the shown embodiment, the damper bracket 40' has a first bracket segment 44' coupled to the turbine case 17 at a first mounting point, a second bracket segment 48' coupled to the manifold 22b (and/or to manifold 22a in other embodiments) at a second mounting point, and an integrated wire rope isolator 54' operatively coupling to first bracket segment 44' to the second bracket segment 48'. The wire rope isolator 54' provides a degree of static stiffness to adequately support the manifold 22b, while providing a damping effect to reduce vibration transmission from the turbine case 17 to the manifold assembly 22, as will be discussed in further detail below. Other configurations for the damper bracket 40' are contemplated. For instance, in an embodiment, the damper bracket 40' includes only one bracket segment (e.g., first bracket segment 44' or segment 48') coupled to one of the turbine case 17 or the manifold 22b. The wire rope isolator 54' is coupled to the bracket segment 44' or 48' at a first end and directly coupled to the turbine case 17 or the manifold 22b at the other end (for instance via apertures through a flange of the turbine case 17 or the manifold 22b). Yet other configurations may further be contemplated.

In the shown case, the support 46 is a flange 46 having apertures 46a extending therethrough and cutouts 46b, the apertures 46a provided for the attachment of the first bracket segment 44' of the damper bracket 40', for instance via a fastener 38. Similarly, a flange 34a formed by the abutment of the outer manifold body 34 and inner manifold body 36 of the manifold 22b includes apertures 34b disposed therethrough for the attachment of the second bracket segment 48' of the damper bracket 40', illustratively via a fastener 38. Other attachment configurations are contemplated.

In the shown case, the first bracket segment 44' of the damper bracket 40' includes a planar section 44a' for mounting the first bracket segment 44' to the flange 46 of the turbine case 17, and an angled section 44b' emanating from the planar section 44a' at a non-zero angle and engaging the wire rope isolator 54', illustratively via apertures 44c' disposed through the angled section 44b'. Similarly, the second bracket segment 48' of the depicted damper bracket 40' includes a planar section 48a' for mounting to the flange 34a of the manifold 22b, and an angled section 48b' emanating from the planar section 48a' at a non-zero angle and engaging the wire rope isolator 54', illustratively via apertures 48c' through the angled section 48b'. Illustratively, the first bracket segment 44' at the first mounting point (i.e., at the connection with the flange 46 of the turbine case 17) and the second bracket segment 48' at the second mounting point (i.e., at the connection with the flange 34a of the manifold 22b) extend in intersecting planes. In particular, the planar section 44a' of the first bracket segment 44' and the planar section 48a' of the second bracket segment 48' extend in directions normal to one another. Stated differently, the angled sections 44b', 48b' extend from respective planar sections 44a', 48a' at angles such that the planar sections 44a', 48a' are oriented perpendicularly to one another upon attachment to flanges 46, 34a. Other configurations for the first and second bracket segments 44', 48' may be contemplated. For instance, one or both bracket segments 44', 48' may be formed of a singular curved body between respective flanges 46, 34a and the wire rope isolator 54'. In the shown case, the first mounting point (i.e., at the connection with the flange 46 of the turbine case 17) and the second mounting point (i.e., at the connection with the flange 34a of the manifold 22b) are axially and radially spaced apart from one another relative to the axis 11. Other spatial arrangements between the mounting points may be contemplated. **In** the shown case, the angled sections 44b', 48b' are coupled to the looped wire 56' at diametrically opposed locations along the looped wire 56'. Other coupling locations for the angled sections 44b', 48b' along the looped wire 56' may be contemplated. In addition, various couplings between the looped wire 56' and the apertures 44c', 48c' are contemplated, for instance a tight frictional fit of the looped wire 56' through the apertures 44c', 48c', a welded coupling, and a clamped coupling.

The depicted wire rope isolator 54' includes a looped wire 56' coupling the first bracket segment 44' of the damper bracket 40' to the second bracket segment 48' of the damper bracket 40'. In particular, the looped wire 56' alternatingly extends through the apertures 44c' in the angled section 44b' in the first bracket segment 44' and the apertures 48c' in the angled section 48b' in the second bracket segment 48'. Other attachment configurations are contemplated, for instance one or more intermediate structures between the looped wire 56' and the first and second bracket segments 44', 48'.

In the shown embodiment, the looped wire 56' includes a plurality of individual wires 56a' braided together. The number of individual wires 56a' and their degree of twist may vary, for instance to vary the stiffness, flexibility and/or level of damping provided by the damper bracket 40'. The looped wire 56' is therefore adapted to absorb or dampen the various excitations experienced by the damper bracket 40' via Coulomb frictional damping to thereby dampen movement of the first bracket segment 44' and the second bracket segment 48' relative to one another. Stated differently, frictional forces are generated by relative movements between the individual wires 56a' due to vibrations transmitted from the turbine case 17, thereby providing a dampening effect to the damper bracket 40'. Stated differently, the wire rope isolator 54' is adapted to modulate the displacement of the damper bracket 40' by providing a damping effect through friction between the individual wires 56a'. The wire rope isolator 54' is therefore adapted to provide a dampening effect while maintaining the manifold assembly 22's required degree of flexibility. Various lengths, thickness and materials for the looped wire 56' may be contemplated, for instance for tuning to specific vibrational frequencies. In particular, in various embodiments, the wire rope isolator 54' has characteristics including: a wire diameter, a wire length, a degree of wire twist, and a number of individual wires braided together. The characteristics of the wire rope isolator 54' are selected to dampen vibrations from the casing 17 of the aircraft engine 10 to the cooling manifold 22a, 22b.

In the shown case, the apertures 44c', 48c' are distributed substantially across an entire width of the first bracket segment 44' and the second bracket segment 48'. By substantially, it is understood that the apertures 44c', 48c', approach the edges of each of the first bracket segment 44' and the second bracket segment 48', illustratively of their respective angled sections 44b', 48b'. As such, the looped wire 56' occupies substantially an entire width of the first and second bracket segments 44', 48'. In other cases, the looped wire 56' extends only partially across the width of the first and second bracket segments 44', 48'. Other configurations may further be contemplated.

Referring now to FIG. 5, a cross-sectional view of the cooling manifolds 22a, 22b mounted to the turbine case 17 is shown, according to another embodiment of the present disclosure. Unless otherwise specified, like reference numerals refer to like elements. Each cooling manifold 22a, 22b includes an outer manifold body 34 and an inner manifold body 36 disposed radially inwardly of the outer manifold body 34. Each outer manifold body 34 is operatively connected to the inner manifold body 36 at various locations, illustratively via fasteners 38. In this embodiment, Both cooling manifolds 22a, 22b are mounted to the turbine case 17 via damper brackets 40'. As discussed above, the number of damper brackets 40' versus brackets 40, and their respective locations along the outer circumferences of the cooling manifolds 22a, 22b, may vary.

According to another aspect of the present disclosure, there is provided a method for absorbing or hindering vibrations between an accessory (e.g., cooling manifold assembly 22) and a casing (e.g., turbine case 17) of an aircraft engine. The accessory is coupled to the casing via brackets 40, 40', at least one of the brackets 40' having a first bracket segment 44' coupled to the casing, a second bracket segment 48' coupled to the accessory, and a wire rope isolator 54' including a looped wire 56' coupling the first bracket segment 44' to the second bracket segment 48', the looped wire 56' dampening or absorbing vibrations between the accessory and the casing.

In an embodiment, coupling the accessory to the casing via brackets 40, 40' includes coupling the looped wire 56' to the first bracket segment 44' and to the second bracket 48' segment via apertures 46a, 34b disposed through the first bracket segment 44' and through the second bracket segment 48'.

In an embodiment, coupling the looped wire 56' to the first bracket segment 44' and to the second bracket segment 48' includes coupling the looped wire 56' to the first bracket segment 44' and to the second bracket segment 48' across an entire width of the first bracket segment 44' and the second bracket segment 48'.

In an embodiment, coupling the accessory to the casing via brackets 40, 40' includes securing the first bracket segment 44' to the casing in a planar direction normal to a planar direction of the second bracket segment 48' secured to the accessory.

According to some aspects, the present disclosure provides for a mounting arrangement for a cooling manifold assembly 22 and a turbine case 17. The mounting arrangement is adapted for dampening of a connection between the cooling manifold assembly 22 to the turbine case 17 via one or more damper brackets 40' to provide sufficient flexibility to the cooling manifold assembly 22 while dampening vibrations via the damper bracket(s) 40', thereby striking a balance between dynamics and stresses. Advantageously, the above-described wire rope isolator 54' is adapted to be integrally formed with the damper bracket(s) used to mount the cooling manifold assembly 22 to the turbine case 17.

The above-disclosed damper bracket 40' are described as being provided for use in coupling a cooling manifold assembly 22 to a turbine case 17. However, it is understood that the damper bracket 40' with the integrated wire rope isolator 54' is implementable in other mounting arrangements, for instance to mount other engine accessories such as air, fuel or oil tubes, to the casing of the engine 10. Other locations for the above-disclosed damper bracket 40' may be contemplated where an engine bracket requires dampening without increased stiffness.

It is noted that various connections are set forth between elements in the preceding description and in the drawings. It is noted that these connections are general and, unless specified otherwise, may be direct or indirect and that this specification is not intended to be limiting in this respect. A coupling between two or more entities may refer to a direct connection or an indirect connection. An indirect connection may incorporate one or more intervening entities. The term "connected" or "coupled to" may therefore include both direct coupling (in which two elements that are coupled to each other contact each other) and indirect coupling (in which at least one additional element is located between the two elements).

It is further noted that various method or process steps for embodiments of the present disclosure are described in the preceding description and drawings. The description may present the method and/or process steps as a particular sequence. However, to the extent that the method or process does not rely on the particular order of steps set forth herein, the method or process should not be limited to the particular sequence of steps described. As one of ordinary skill in the art would appreciate, other sequences of steps may be possible. Therefore, the particular order of the steps set forth in the description should not be construed as a limitation.

Furthermore, no element, component, or method step in the present disclosure is intended to be dedicated to the public regardless of whether the element, component, or method step is explicitly recited in the claims. As used herein, the terms "comprises", "comprising", or any other variation thereof, are intended to cover a non-exclusive inclusion, such that a process, method, article, or apparatus that comprises a list of elements does not include only those elements but may include other elements not expressly listed or inherent to such process, method, article, or apparatus.

While various aspects of the present disclosure have been disclosed, it will be apparent to those of ordinary skill in the art that many more embodiments and implementations are possible within the scope of the present disclosure. For example, the present disclosure as described herein includes several aspects and embodiments that include particular features. Although these particular features may be described individually, it is within the scope of the present disclosure that some or all of these features may be combined with any one of the aspects and remain within the scope of the present disclosure. References to "various embodiments," "one embodiment," "an embodiment," "an example embodiment," etc., indicate that the embodiment described may include a particular feature, structure, or characteristic, but every embodiment may not necessarily include the particular feature, structure, or characteristic. Moreover, such phrases are not necessarily referring to the same embodiment. The use of the indefinite article "a" as used herein with reference to a particular element is intended to encompass "one or more" such elements, and similarly the use of the definite article "the" in reference to a particular element is not intended to exclude the possibility that multiple of such elements may be present.

The embodiments described in this document provide non-limiting examples of possible implementations of the present technology. Upon review of the present disclosure, a person of ordinary skill in the art will recognize that changes may be made to the embodiments described herein without departing from the scope of the present technology. Yet further modifications could be implemented by a person of ordinary skill in the art in view of the present disclosure, which modifications would be within the scope of the present technology.

## Claims

1. A mounting arrangement, comprising:
a casing (17) of an aircraft engine (10) extending around an axis (11);
an accessory (22); and
a bracket (40') for mounting the accessory (22) to the casing (17), the bracket (40') comprising:
a first bracket segment (44') coupled to the casing (17) at a first mounting point;
a second bracket segment (48') coupled to the accessory (22) at a second mounting point; and
a wire rope isolator (54') including a looped wire (56') coupling the first bracket segment (44') to the second bracket segment (48'), wherein the first bracket segment (44') at the first mounting point and the second bracket segment (48') at the second mounting point extend in intersecting planes.

2. The mounting arrangement as defined in claim 1, wherein:
the first bracket segment (44') includes a planar section (44a') coupled to a flange (46) of the casing (17) at the first mounting point, and an angled section (44b') extending from the planar section (44a') and coupled to the looped wire (56');
the second bracket segment (48') includes a planar section (48a') coupled to a flange (34a) of the accessory (22) at the second mounting point, and an angled section (48b') extending from the planar section (48a') and coupled to the looped wire (56'); and
the first and second mounting points are axially and radially spaced-part from one another relative to the axis (11).

3. The mounting arrangement as defined in claim 2, wherein the planar section (44a') of the first bracket segment (44') and the planar section (48a') of the second bracket segment (48') extend in directions normal to one another.

4. The mounting arrangement as defined in claim 2 or 3, wherein the angled section (44b') of the first bracket segment (44') and the angled section (48b') of the second bracket segment (48') each include a plurality of apertures (44c'; 48c') through which the looped wire (56') extends.

5. The mounting arrangement as defined in claim 4, wherein the apertures (44c'; 48c') are distributed substantially across an entire width of the first bracket segment (44') and the second bracket segment (48').

6. The mounting arrangement as defined in any of claims 2 to 5, wherein the angled section (44b') of the first bracket segment (44') and the angled section (48b') of the second bracket segment (48') are coupled to the looped wire (56') at diametrically opposed locations along the looped wire (56').

7. The mounting arrangement as defined in any preceding claim, wherein the accessory (22) is a cooling manifold (22), and the wire rope isolator (54') has characteristics including: a wire diameter, a wire length, a degree of wire twist, and a number of individual wires braided together, the characteristics of the wire rope isolator (54') are selected to dampen vibrations from the casing (17) of the aircraft engine (10) to the cooling manifold (22).

8. The mounting arrangement as defined in any preceding claim, wherein the looped wire (56') extends substantially across an entire width of the first bracket segment (44') and the second bracket segment (48').

9. A method for absorbing vibrations between an accessory (22) and a casing (17) of an aircraft engine (10), comprising:
coupling the accessory (22) to the casing (17) via brackets (40'), at least one of the brackets (40') having a first bracket segment (44') coupled to the casing (17), a second bracket segment (48') coupled to the accessory, and a wire rope isolator (54') including a looped wire (56') coupling the first bracket segment (44') to the second bracket segment (48'), the looped wire (56') dampening vibrations between the accessory and the casing (17).

10. The method as defined in claim 9, wherein coupling the accessory (22) to the casing (17) via brackets (40') includes coupling the looped wire (56') to the first bracket segment (44') and to the second bracket segment (48') via apertures (44c'; 48c') distributed substantially across the first bracket segment (44') and the second bracket segment (48').

11. The method as defined in claim 10, wherein coupling the looped wire (56') to the first bracket segment (44') and to the second bracket segment (48') includes coupling the looped wire (56') to the first bracket segment (44') and to the second bracket segment (48') across an entire width of the first bracket segment (44') and the second bracket segment (48').

12. The method as defined in claim 9, 10 or 11, wherein coupling the accessory (22) to the casing (17) via brackets (40') includes securing the first bracket segment (44') to the casing (17) in a planar direction normal to a planar direction of the second bracket segment (48') secured to the accessory (22).
